(19) Europäisches Patentamt
European Patent Office
Office européen des brevets

(11) **EP 2 278 359 B1**

(12) **EUROPÄISCHE PATENTSCHRIFT**

(45) Veröffentlichungstag und Bekanntmachung des Hinweises auf die Patenterteilung:
**01.02.2012  Patentblatt 2012/05**

(51) Int Cl.:
*G01V 8/00* *(2006.01)*        *G01V 8/20* *(2006.01)*

(21) Anmeldenummer: **10007002.8**

(22) Anmeldetag: **07.07.2010**

(54) **Verfahren zum Betrieb von Lichtschranken**

Method for operating light barriers

Procédé de fonctionnement de barrières lumineuses

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **16.07.2009   DE 102009033435**

(43) Veröffentlichungstag der Anmeldung:
**26.01.2011   Patentblatt 2011/04**

(73) Patentinhaber: **Leuze electronic GmbH + Co. KG 73277 Owen/Teck (DE)**

(72) Erfinder: **Argast, Martin 72584 Hülben (DE)**

(74) Vertreter: **Ruckh, Rainer Gerhard Fabrikstrasse 18 73277 Owen/Teck (DE)**

(56) Entgegenhaltungen:
**EP-A1- 1 464 983        EP-A1- 1 821 448 DE-A1- 10 355 008**

EP 2 278 359 B1

**Beschreibung**

Die Erfindung betrifft ein Verfahren zum Betrieb von Lichtschranken.

In zahlreichen industriellen Applikationen wird ein Überwachungsbereich durch eine oder mehrere Lichtschranken abgesichert, welche jeweils einen Sendelicht in Form von Sendepulsen emittierenden Sender und einen Empfänger zum Empfang des Sendelichts aufweisen. Dabei können mehrere Lichtschranken dicht benachbart sein, so dass Sendelicht der einen Lichtschranke auch in den Empfängern der benachbarten Lichtschranke fällt. Um die Lichtachsen, das heißt die vom Sender einer Lichtschranke emittierten und zum Empfänger einer Lichtschranke geführten Sendelichtstrahlen, getrennt auswerten zu können, werden die Sender bei der Inbetriebnahme auf unterschiedliche Taktfrequenzen eingestellt, dass heißt die Sendepulse werden mit verschiedenen Taktfrequenzen emittiert. Beim zugehörigen Empfänger der jeweiligen Lichtschranke wird die Resonanzfrequenz eines Bandpasses auf diese Taktfrequenz parametriert. Der Frequenzversatz zur Nachbarlichtschranke muss so groß gewählt werden, dass der Bandpass das Signal des Nachbarn sicher unterdrückt.

Nachteilig hierbei ist, dass jeder Sender und Empfänger bei der Inbetriebnahme parametriert werden muss. Weiterhin ist nachteilig, dass sende- und empfangsseitig eine Hardware zur Frequenzauswahl, zum Beispiel ein mehrstufiger Schalter, vorgesehen werden muss. Schließlich ist nachteilig, dass die Bauteile des Empfängerbandpasses sehr eng toleriert oder der Empfängerbandpass auf die möglichen Frequenzen abgeglichen werden muss, um eine gegenseitige Beeinflussung von Lichtschranken zu vermeiden, das den konstruktiven Aufwand dieser Lichtschranke erheblich erhöht.

Die EP 1 464 983 A1 betrifft ein optoelektronisches Überwachungssystem mit einer oder mehreren Lichtschranken. Jede Lichtschranke weist einen Sender und Empfänger auf, die an gegenüberliegenden Rändern eines Überwachungsbereichs angeordnet sind. Der Sender und Empfänger einer Lichtschranke sind optisch synchronisiert. Jeder Sender sendet Lichtpulse in Richtung eines Empfängers aus, wodurch ein optischer Kanal gebildet wird. Aus dem dadurch am jeweiligen Empfänger generierten Ausgangssignale werden in einer Steuerund/oder Auswerteeinheit Auswertesignal beliefert. Die Steuer und/oder Auswerteeinheit umfasst Mittel, um zumindest im Fall einer erkannten, von einem anderen System ausgehenden Störung die Abtastperiode, mit der der Überwachungsbereich über einen jeweiligen optischen Kanal abgetastet wird, und/oder den Zeitpunkt, zu dem der Überwachungsbereich über einen jeweiligen optischen Kanal während einer jeweiligen Abtastperiode mit wenigstens einem Lichtpuls beaufschlagt wird, und/oder die Pulsfolge bzw. Pulsabstände innerhalb eines jeweiligen optischen Kanals, und/oder die Reihenfolge, in der zumindest zwei optische Kanäle nacheinander aktiviert werden, nach dem Zufallsprinzip zu variieren.

In der DE 103 55 008 A1 ist ein Lichtgitter beschrieben, das eine Anordnung von Paaren bildenden Sendern und Empfänger aufweist, welche zur Detektion von Objekten in einem Überwachungsbereich eingesetzt werden. Die Sender und Empfänger eines Paares werden synchron aktiviert. Aus den Einzel-Empfangssignalen der einzelnen Empfänger wird ein Gesamt-Empfangssignal gebildet und abgespeichert. Dieses Gesamt-Empfangssignal wird unter Verwendung einer Filtermatrix gefiltert.

Die EP 1 821 448 A1 betrifft ein Verfahren zur Synchronisation der Übertragung einer Bitfolge der Bitfrequenz f1 von einem Sender zu einem Empfänger. In einem ersten Verfahrensschritt erfolgt ein Abtasten wenigstens eines Bitpulses in dem Empfänger mit einer Abtastfrequenz f2, die größer ist als die Bitfrequenz f1 der Bitfolge, so dass sich innerhalb dieses Bitpulses mehrere Abtastpunkte ergeben. Dann erfolgt ein Zuordnen des Wertes 0 zu sämtlichen Abtastpunkten darauf ein Ermitteln des Abtastpunktes, bei dem eine Flanke des Bitpulses detektiert wird, und Zuordnen des Wertes 1 zu diesem Abtastpunkt. Schließlich erfolgt ein Abtasten der Bitfolge mit der Bitfrequenz f1 synchronisiert mit einem der Abtastpunkte, denen der Wert 0 zugeordnet wurde.

Der Erfindung liegt die Aufgabe zugrunde, ein Verfahren der eingangs genannten Art bereitzustellen, welches mit geringem konstruktivem Aufwand einen störungssicheren Betrieb von Lichtschranken ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zum Betrieb wenigstens einer Lichtschranke, umfassend einen Sender und einen Empfänger. Bei freiem Strahlengang der Lichtschranke treffen vom Sender mit einer Taktfrequenz emittierte Sendepulse auf den Empfänger auf. Die im Empfänger der wenigstens einen Lichtschranke durch den Sendepuls generierten Empfangssignale werden digital gefiltert. Dabei werden diese mit einer Abtastfrequenz mit mehreren Abtastungen, asynchron zur Taktfrequenz des Senders abgetastet. Aus den bei den Abtastungen erhaltenen Messwerten wird ein Objektfeststellungssignal generiert.

Die digitale Filterung der Empfangssignale kann im wesentlichen softwaretechnisch durchgeführt werden, dass heißt aufwendige Analogschaltungen, insbesondere Analogfilter, brauchen nicht vorgesehen werden.

Ein wesentlicher Vorteil des erfindungsgemäßen Verfahrens besteht darin, dass durch die digitale Filterung Störlichteinflüsse weitestgehend eliminiert werden können, wobei insbesondere auch eine gegenseitige Beeinflussung von Lichtschranken mit Taktfrequenzen, die sich nur geringfügig unterscheiden, sicher vermieden werden kann.

Hierzu erfolgt die Abtastung der Empfangssignale des Empfänger mit einer an die Taktfrequenz des Senders angepassten Abtastfrequenz. Vorteilhaft hierbei ist, dass eine Synchronisierung der Abtastung auf die Taktfrequenz nicht erforderlich ist, dass heißt die Abtastung kann asynchron zum Sendetakt erfolgen. Wesentlich für eine digitale Filterung ist lediglich die Wahl der auf die Taktfrequenz abgestimmten Abtastfrequenz, um so mit der Abtastung eine auf die Taktfrequenz abgestimmte Bandpaßwirkung zu erhalten, die dafür sorgt, dass im wesentlichen nur Signale mit einer Taktfrequenz verstärkt und alle anderen Signale unterdrückt werden.

Das erfindungsgemäße Verfahren eignet sich insbesondere für Lichtschranken, bei welchen der Sender Sendepulse mit einem Puls/Pausenverhältnis von zumindest näherungsweise 1:1 emittiert.

Gemäß einer vorteilhaften Ausführungsform werden innerhalb einer Abtastperiode $2^k$ (k > 1) Abtastungen durchgeführt. Gebildet werden jeweils Differenzen zweier Meßwerte, die um eine halbe Abtastperiode versetzt voneinander sind. Aus der Summe der Differenzen wird das Objektfeststellungssignal generiert, wobei die Abtastperiode zumindest näherungsweise einer Sendeperiode des Senders entspricht. Vorzugsweise wird zur Generierung des Objektfeststellungssignals die Summe mit einem Schwellwert bewertet. Besonders vorteilhaft ist diese Ausführungsform der Erfindung derart weitergebildet, dass die Meßwertbildungen über mehrere Abtastperioden wiederholt werden. Aus den für die einzelnen Abtastperioden erhaltenen Differenzen werden Einzelsummen erhalten, aus welchen eine Summe gebildet wird, die zur Generierung des Objektfeststellungssignals herangezogen wird.

Diese Ausführungsform eignet sich besonders für Lichtschranken, die Sendepulse mit einem Puls-/Pausenverhältnis von 1:1 emittieren. Die Abtastung der Empfangssignale erfolgt periodisch, wobei die Abtastperiode dem Quotient der Abtastfrequenz und der Anzahl der Abtastungen pro Abtastperiode, $2^k$ entspricht.

Wesentlich ist die Anpassung der Abtastperiode an die Sendeperiode des Senders, wodurch gewährleistet ist, dass die Durchlassfrequenz der digitalen Filterung der Taktfrequenz des Senders entspricht, so dass im wesentlichen nur Signale mit der Taktfrequenz verstärkt werden und zur Auswertung gelangen. Generell wird durch die Abtastung der Empfangssignale eine auf die Taktfrequenz des Senders abgestimmte Bandpasswirkung erhalten.

Die Abstimmung der Zentral frequenz des Bandpasses auf die Taktfrequenz kann durch eine empfangsseitige Parametrierung während eines Einlernvorgangs erfolgen.

Generell ist auch ein selbsttätiger Abgleich der Abtastfrequenz auf die Taktfrequenz des Senders möglich. Insbesondere ist auch während des Betriebs der Lichtschranke ein selbsttätiges Nachführen der Abtastfrequenz auf die Taktfrequenz des Senders möglich, wenn diese durch Temperatureinflüsse oder dergleichen driftet.

Gemäß einer vorteilhaften Weiterbildung der Erfindung sind mehrere Lichtschranken vorgesehen, deren Sender mit unterschiedlichen Taktfrequenzen betrieben werden, wobei vorteilhaft die Vorgabe der Taktfrequenz der Sender der Lichtschranken durch eine Verschaltung der einzelnen Sender realisiert wird.

Die digitale Filterung der Empfangssignale der Empfänger der Lichtschranken erfolgt wieder mit einer diskreten Abtastung der Empfangssignale wobei die einzelnen Abtastfrequenzen auf die Taktfrequenzen der einzelnen Sender abgestimmt sind. Dadurch können unerwünschte gegenseitige Beeinflussungen der Lichtschranken vermieden werden.

Die Erfindung wird im Folgenden anhand der Zeichnungen erläutert. Es zeigen:

Figur 1: Blockschaltbild einer Lichtschranke.

Figur 2a: Zeitdiagramm von Sendepulsen, die vom Sender der Licht- schranke gemäß Figur 1 mit einer Taktfrequenz emittiert wer- den.

Figur 2b: Zeitdiagramm von Empfangssignalen der Lichtschranke gemäß Figur 1, die mit einer Abtastfrequenz abgetastet werden.

Figur 3: Ergebnisse der Abtastung für die Anordnung der Figuren 1, 2 bei optimaler Anpassung der Abtastfrequenz an die Taktfre- quenz.

Figur 4: Ergebnisse der Abtastung für die Anordnung der Figuren 1, 2 bei noch ausreichender Anpassung der Abtastfrequenz an die Taktfrequenz.

Figur 5: Ergebnisse der Abtastung für die Anordnung der Figuren 1, 2 bei mangelnder Anpassung der Abtastfrequenz an die Taktfre- quenz.

Figur 6: Darstellung der durch die digitale Filterung gemäß den Figuren 3 bis 5 erhaltenen Bandpaßwirkung.

Figur 7: Gegenüber Figur 6 verbesserte Bandpaßwirkung.

Figur 8: Bei der digitalen Filterung gemäß den Figuren 3 bis 6 erhaltenes Signal zur Erzeugung eines Objektfeststellungssignals.

Figur 9: Ausführungsform einer Mehrfachanordnung von Lichtschran- ken.

Figur 10: Darstellung von Abtastbandpässen für die Anordnung gemäß Figur 10.

Figur 11: Weitere Ausführungsform einer Mehrfachanordnung von Licht- schranken.

Figur 12: Darstellung von Abtastbandpässen für die Anordnung gemäß Figur 12.

Figur 13a,b: Diagramme zur selbsttätigen Nachfüh-rung der Abtastfrequenz einer Licht-schranke.

Figur 14a,b: Zeitdiagramme einer Abtastung des Empfangssignals einer Lichtschranke.

Figur 15a: Zeitdiagramme gemäß Figur 14b bei vorhandener Störung.

Figur 15b: Variante von Figur 15a.

Figur 16: Frequenzabhängigkeit des Störwertintegrals für die Abtastungen gemäß Figuren 14, 15.

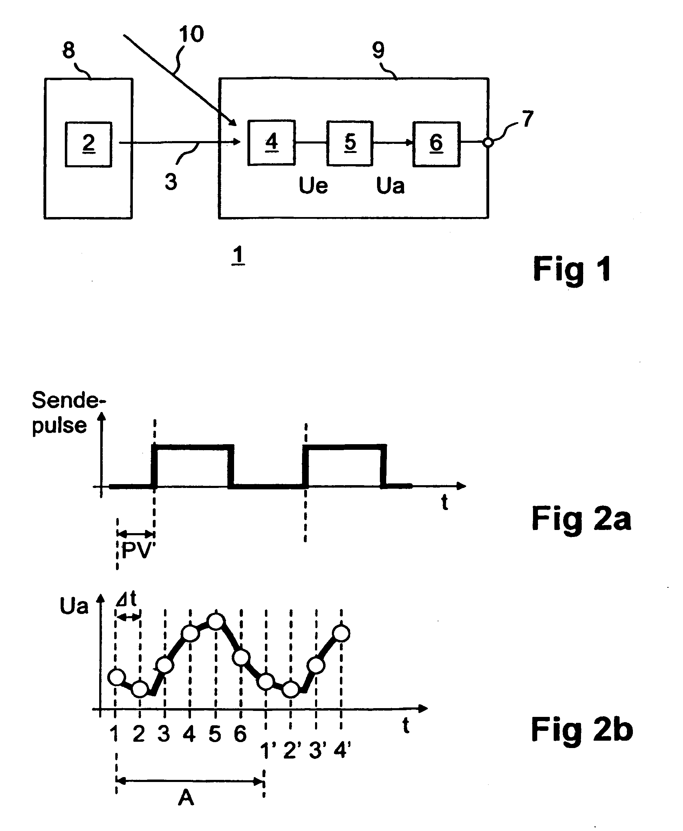

Figur 1 zeigt ein Ausführungsbeispiel einer Lichtschranke 1. Die Lichtschranke 1 weist einen Sender 2 in Form einer Leuchtdiode auf, welcher Lichtstrahlen 3 in Form von Sendepulsen emittiert. Weiterhin umfasst die Lichtschranke 1 einen Empfänger 4 zum Empfang der Lichtstrahlen 3. Der Empfänger 4 kann von einer Photodiode gebildet sein. An den Ausgang des Empfängers 4 ist eine Signalaufbereitungseinheit 5 angeschlossen, deren Ausgangssignale über einen nicht dargestellten Analog-Digitalwandler einer Auswerteeinheit 6 zugeführt werden, in welcher in Abhängigkeit der Empfangssignale am Ausgang des Empfängers 4 ein Objektfeststellungssignal generiert wird. Das Objektfeststellungssignal wird über einen Schaltausgang 7 ausgegeben.

Der Sender 2 ist in einem ersten Gehäuse 8 integriert, während der Empfänger 4 und die daran angeschlossenen empfangsseitigen Bauteile in einem zweiten Gehäuse 9 integriert sind. Die Gehäuse 8, 9 sind an gegenüberliegenden Rändern eines Überwachungs-bereichs angeordnet. Bei diesem Überwachungsbereich gelangen die Lichtstrahlen 3 des Senders 2 ungehindert zum Empfänger 4. Dagegen bewirkt ein Objekt im Über-wachungsbereich eine Strahlunterbrechung der Licht-strahlen 3. Dementsprechend wird in der Auswerteeinheit 6 als Objektfeststellungssignal ein binäres Schaltsignal generiert, dessen Schaltzustände angeben, ob sich ein Objekt im Überwachungsbereich befindet oder nicht.

Fehldetektionen können durch Einstrahlung von Fremdlicht 10 bewirkt werden, wobei dieses Fremdlicht 10 von anderen Lichtschranken 1 nur von Fremdstrahlen generiert werden kann. Um derartige Fremd- oder Störlichteinflüsse zu eliminieren, erfolgt in der Licht-schranke 1 eine digitale Filterung der Empfangssignale, die anhand der nachfolgenden Figuren 2 bis 8 erläutert wird.

Figur 2a zeigt die vom Sender 2 der Licht-schranke 1 emittierten Sendepulse. Der Sender 2 emittiert mit einer Taktfrequenz eine Folge von rechteckförmigen Sendepulsen mit einem Puls/Pausenverhältnis von 1:1.

Figur 2b zeigt den zeitlichen Verlauf der Empfangssignale Ua nach Durchgang durch die Signalaufbereitungseinheit 5 bei freiem Überwachungsbereich, das heißt für den Fall, dass die Sendepulse ungehindert auf den Empfänger 4 auftreffen. Das Empfangssignal weist die den Folgen der Sendepulse entsprechende Taktfrequenz auf. Jedoch ist das Empfangssignal in Folge der Signalaufbereitung in der Signalaufbereitungseinheit 5 nicht mehr rechteckförmig. Dies beruht darauf, dass durch Koppelkondensatoren im Empfangsverstärker der Signalaufbereitungseinheit 5 ein Hochpass entsteht. Durch eine frequenzbegrenzte Verstärkung von Transistoren und deren Beschaltung in der Signalaufbereitungseinheit 5 bildet sich weiterhin ein Tiefpass, der zusammen mit dem Hochpass einen breitbandigen Empfangerbandpass ergibt. Zur Durchführung der digitalen Filterung wird das verstärkte Ausgangssignal Ua durch den AD-Wandler vor Einlesen in die Auswerteeinheit 6 mit einer Abtastfrequenz abgetastet.

Wie aus Figur 2b ersichtlich, wird das verstärkte Empfangssignal Ua periodisch abgetastet, wobei die Abtastperiode in Figur 2b mit A bezeichnet ist. Im vorliegenden Fall erfolgen pro Abtastperiode sechs diskrete, mm $\Delta t$ versetzte Abtastungen. Dabei ist $1/\Delta t$ die Abtastfre-quenz. Die Abtastung erfolgt asynchron zur Taktfre-quenz des Senders 2, das heißt es existiert ein zufälliger Phasenversatz PV (dargestellt in Figur 2a) zwischen der Abtastung und der Taktfrequenz. Allgemein erfolgen pro Abtastperiode $N=2^k$ (k>1) Abtastungen. Die bei den einzelnen Abtastungen gewonnenen Messwerte werden zur digitalen Filterung des Empfangssignals gebildet. Hierzu wird für jede Abtastperiode die Differenz von Messwertepaaren, die zeitlich eine halbe Taktperiode versetzt sind, gebildet. Diese Differenzen geben einen Beitrag zum Ergebnis, das ein Maß für den Empfangspegel (Intensität) ist. Wegen des zufälligen Phasenversatzes PV liefert zum Beispiel das Messwertepaar D3 = u(3) - u(6) einen geringen Beitrag. Deshalb müssen alle Messwertepaare berücksichtigt werden. Es werden fol-gende Differenzwerte gebildet:

$$D1 = u(1) - u(4)$$

$$D2 = u(2) - u(5)$$

$$D3 = u(3) - u(6)$$

Um eine Frequenzselektion zu erhalten, werden die Differenzwerte D1, D2 und D3 zweckmäßig über mehrere Perioden der Taktfrequenz des Senders 2 aufsummiert.

Bei der in Figur 2b dargestellten Abtastung des Empfangssignals ist die Abtastfrequenz optimal auf die Taktfrequenz eingestellt, indem exakt die Beziehung

$$f_T = \frac{1}{N} * f_A$$

erfüllt ist, wobei $f_T$ die Taktfrequenz des Senders 2, $f_A$ die Abtastfrequenz und N die Zahl der Abtastungen pro Abtastperiode ist. Dies bedeutet, dass in diesem Fall die Abtastperiode der Sendeperiode des Senders -2 entspricht.

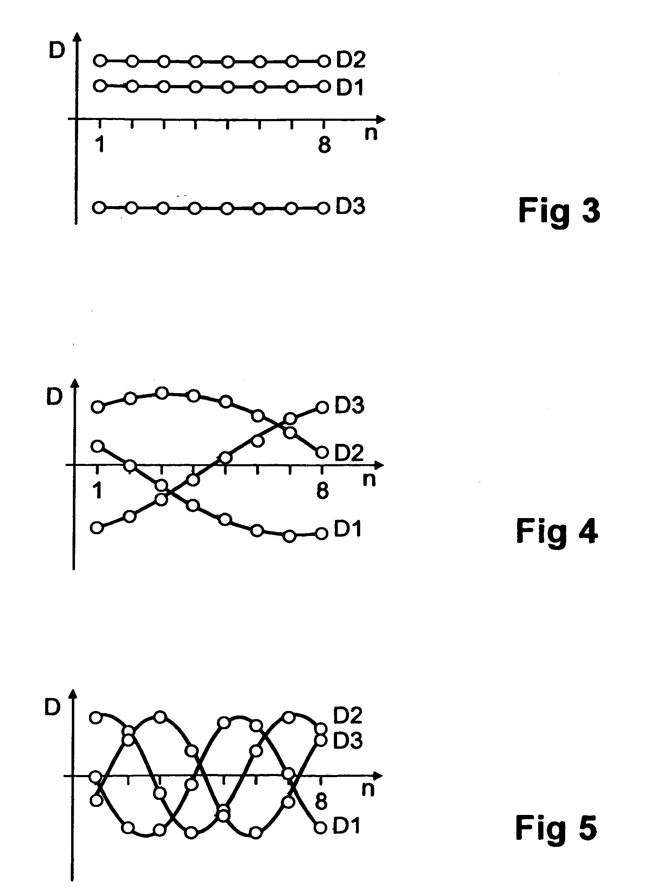

Für diesen Fall wird für die Differenzen D1, D2, D3 in Abhängigkeit der aufeinander folgenden Sendeperioden des Senders 2 das in Figur 3 erhaltene Diagramm erhalten. Daraus ist ersichtlich, dass die Differenzen D1, D2, D3 zeitlich konstant sind.

Figur 4 zeigt den Fall einer geringen Fehlanpassung der Abtastfrequenz und der Taktfrequenz, wobei in diesem Fall die folgende Beziehung zwischen den beiden Größen gilt.

$$f_T = 1,05 * \frac{1 f_A}{N}$$

Infolge der geringen Fehlanpassung zwischen $f_A$ und $f_T$ wird eine relativ langsame zeitliche Variation der Differenzen D1, D2, D3 erhalten.

Figur 5 zeigt den Fall, wenn eine größere Fehlanpassung zwischen $f_T$ und $f_A$ gegeben ist, wobei in diesem Fall zwischen beiden Größen folgende Beziehung gegeben ist

$$f_T = 1,2 * \frac{1 f_A}{N}$$

Infolge der starken Fehlanpassung zwischen $f_A$ und $f_T$ wird eine schnelle zeitliche Variation der Differenzen D1, D2, D3 erhalten.

Zur Generierung des Objektfeststellungssignals werden zunächst die einzelnen pro Abtastperiode erhaltenen Differenzen D1, D2, D3 über mehrere Abtastperioden gemäß der folgenden Beziehungen aufsummiert:

$$Su1 = D1_1 + D1_2 + ... + D1_n$$

$$Su2 = D2_1 + D2_2 + ... + D2_n$$

$$Su3 = D3_1 + D3_2 + ... + D3_n$$

Aus diesen Werten wird danach gemäß der folgenden Beziehung die Summe

$$E = |Su1| + |Su2| + |Su3|$$

gebildet.

Das binäre Schaltsignal wird dadurch gewonnen, dass die Summe E mit einem Schwellwert s 1 bewertet wird. Liegt dann der aktuelle Wert von E oberhalb des Schwellwerts s1, liegt ein freier Überwachungsbereich vor. Liegt der Wert von E unterhalb des Schwellwerts s1, liegt ein Objekteingriff im Überwachungsbereich vor.

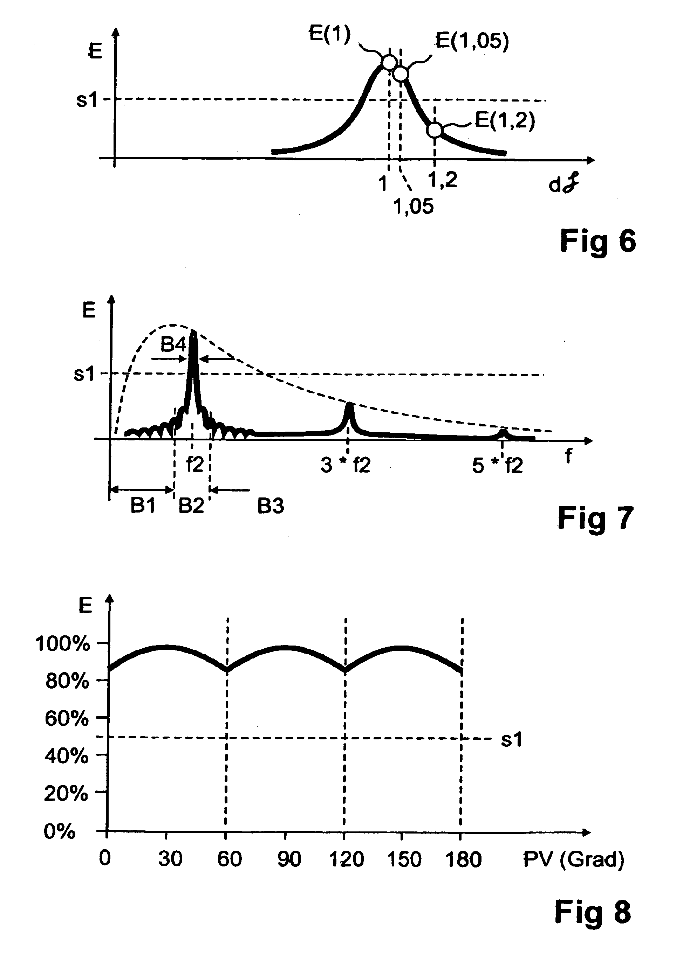

Figur 6 zeigt die mit der geschilderten digitalen Filterung erhaltenen Bandpasswirkung. Dabei zeigt Figur 6 die Abhängigkeit der Summe E in Abhängigkeit des Frequenzquotienten $df = \frac{f_T}{N * f_A}$, wobei f die Frequenz des registrierten Empfangssignals vom Empfänger 4 der Lichtschranke 1 ist.

Wie aus Figur 6 ersichtlich, nimmt die Summe E ihren Maximalwert bei f = 1, das heißt wenn die in Figur 2 dargestellte Bedingung erfüllt ist, dass die Abtastperiode gerade der Sendeperiode entspricht.

Diese Bedingung ist bei einer Lichtschranke 1, deren Abtastperiode genau auf die Sendepulse eingestellt ist, dann erfüllt, wenn die Sendepulse des Senders 2 auch auf den Empfänger 4 auftreffen und wie in Figur 2 dargestellt gebildet werden.

Ändert sich die Taktfrequenz des Senders 2 jedoch aufgrund einer Temperaturdrift oder dergleichen, so kann sich deren Tastfreqüenz etwas ändern, so dass df beispielsweise den Wert 1,05 m (entsprechend dem Fall von Figur 4) annimmt. Der Wert von E (1,05) ist dann kleiner als der Maximalwert E (1,0), jedoch liegt auch dann noch der Wert E (1,05) oberhalb des Schwellwerts s1, so dass noch korrekt ein freier Überwachungsbereich mit dem Objektfeststellungssignal signalisiert wird.

Ist beispielsweise der eigene Sender 2 ausgefallen und es gelangt Sendelicht einer anderen Lichtschranke 1 auf den Empfänger 4, deren Tastfrequenz um 20% höher ist als die Tastfrequenz des eigenen Senders 2, so wird bei der digitalen Filterung der Wert E (1,2) erhalten. Infolge der mit der digitalen Filterung erhaltenen Bandpasswirkung liegt der Wert E (1,2) unterhalb des Schwellwerts s1, das heißt dieses Störlicht wurde von der Lichtschranke 1 erkannt und es wird keine Fehlschaltung dahingehend ausgelöst, dass ein freier Überwachungsbereich angezeigt wird.

Damit wird, wie Figur 6 zeigt, durch die digitale Filterung ein Abstandsbandpass erhalten, der dafür sorgt, dass nur Signale bei df = 1 verstärkt werden, während Signale, deren Frequenz signifikant von df = 1 abweicht, unterdrückt werden.

Figur 7 zeigt eine Verbesserung der Durchführungsform gemäß Figur 6 dahingehend, dass ein sehr schmalbandiges Bandpassfilter, dadurch gebildet wird, dass die Summenbildung über eine größere Anzahl von Taktperioden, z.B. n = 32, erfolgt. Entsprechend dem Verhältnis von Abtastfrequenz zu Taktfrequenz bilden sich wiederkehrende Nullstellen aus, wie das von digitalen Filtern bekannt ist. Im Bereich B1 und B3 werden Störer, das heißt Fremdlichteinstrahler weitgehend unterdrückt. Innerhalb der Bandbreite B4 wird die Taktfrequenz des eigenen Senders 2 sicher erkannt. Bei ungeradzahligen Vielfachen der Resonanzfrequenz f2 bilden sich Maxima aus. Um Fremdlicht 10 in diesen Bereichen zu unterdrücken, wird der analoge Verstärkertiefpass so ausgelegt, dass Fremdlicht 10 mit 3*f2 genügend gedämpft wird und sicher unter dem Schwellwert s1 bleibt.

Das bei der Abtastung gemäß Figur 2 erhaltene Summensignal E ist abhängig von dem Phasenversatz PV dieser Abtastung zur Taktfrequenz des Senders 2. Diese Abhängigkeit ist in Figur 8 dargestellt. Bei den pro Abstandsbandpass durchgeführten sechs Abtastungen beträgt die Welligkeit des Summensignals E ca. 15%. Mit einer höheren Abtastrate k>6 kann die Welligkeit reduziert werden. Die Anzahl der aufsummierten Differenzwerte n hat keinen Einfluss auf die Welligkeit. Da die Welligkeit nur ca. 15% beträgt, wird das Schaltsignal nicht beeinträchtigt, da die Summe E stets oberhalb des Schwellwerts s1 liegt.

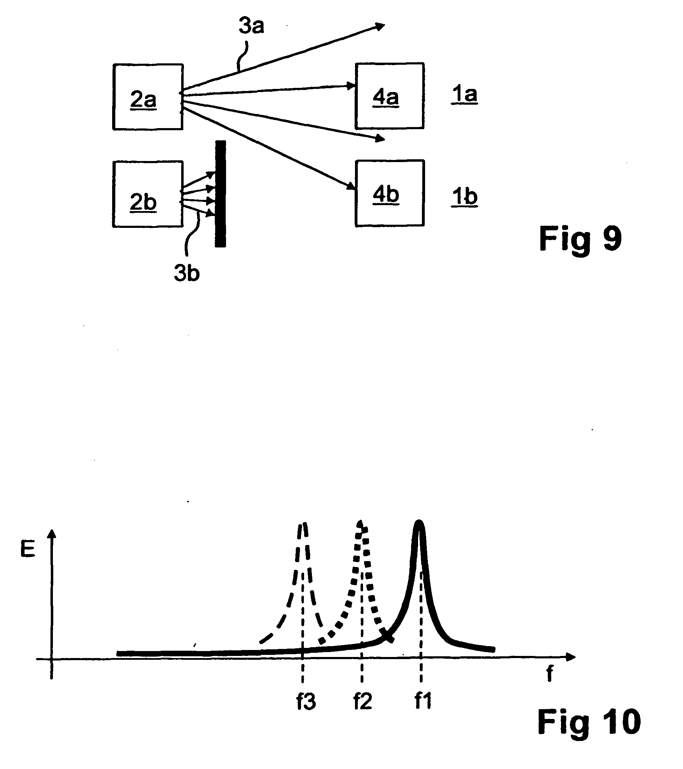

Figur 9 zeigt eine Anordnung von zwei Lichtschranken 1a, 1b, wobei die erste Lichtschranke 1a einen Lichtstrahlen 3a emittierenden Sender 2a und einen Empfänger 4a aufweist. Entsprechend weist die zweite Lichtschranke 1b einen Lichtstrahlen 3b emittierenden Sender 2b und einen Empfänger 4b auf.

Jeder Sender 2a, 2b soll mit einer Taktfrequenz senden, die sich vom benachbarten Sender 2a, 2b genügend unterscheidet. Damit gleichartige Einheiten verwendet werden können, die nicht parametriert werden müssen, sind die Sender 2a, 2b durch eine Steuerleitung 11 verbunden. Zum Anschluss der Steuerleitungen 11 sind bei jedem Sender 2a, 2b jeweils ein Triggereingang 12 und ein Triggerausgang 13 vorgesehen. Der Triggerausgang 13 einer Lichtschranke 1a wird jeweils mit dem Triggereingang 12 des Senders 2b der nachgeschalteten Lichtschranke 1b verbunden. Der Sender 2a, der kein Triggersignal an seinem Triggereingang 12 erkennt, sendet mit der höchstmöglichen Taktfrequenz f1. An seinem Triggerausgang 13a stellt er ein Taktsignal zur Verfügung, das um mindestens den halben Wert eines einstellbaren Frequenzversatzes B2 unter der Taktfrequenz f1 liegt oder einen Code, aus dem der nachfolgende Sender 2 sich die Taktfrequenz f2 generiert.

$$f2 = f1 - B2\,/\,2$$

Der Sender 2b erkennt dieses Triggersignal über seinen Triggereingang 12 und gibt Sendepulse mit der Taktfrequenz f2 aus. Für den nachfolgenden Sender 2b stellt er an seinem Triggerausgang 13 das Triggersignal mit der Frequenz f3 bereit. Damit arbeiten alle so verschalteten Sender 2a, 2b mit unterschiedlichen Frequenzen in abfallender Folge.

Für die Inbetriebnahme werden alle Sender 2a, 2b bis auf einen abgedeckt. Im gezeigten Beispiel gelangt das Sendelicht des Senders 2a zum Empfänger 4a. Durch einen Teachbefehl wird der Empfänger 4a veranlasst, mit den ihm zur Verfügung stehenden Abtastfrequenzen diejenige zu ermitteln, die der Taktfrequenz des Senders 2a entspricht. In einem zweiten Schritt wird der Schwellwert s1 bezogen auf den Maximalwert definiert, dass heißt den bei der digitalen Abtastung erhaltenen Maximalwert für die Summe E.

Figur 10 zeigt die möglichen, durch die bei der digitalen Filterung erhaltenen, Abtastbandpässe mit den Taktfrequenzen f1, f2 und f3, wobei die Abstandsbandpässe entsprechend Figur 6 definiert sind. Wenn das Summensignal E bei der Frequenz f1 den Schwellwert s1 überschreitet, gilt die Taktfrequenz als erkannt und der Empfänger 4a ist damit dem Sender 2a zugeordnet, der Sendepulse mit der Tastfrequenz f1 emittiert. Im nächsten Schritt werden alle außer dem Sender 2b abgedeckt und der Teachvorgang mit dem Empfänger 4a wiederholt.

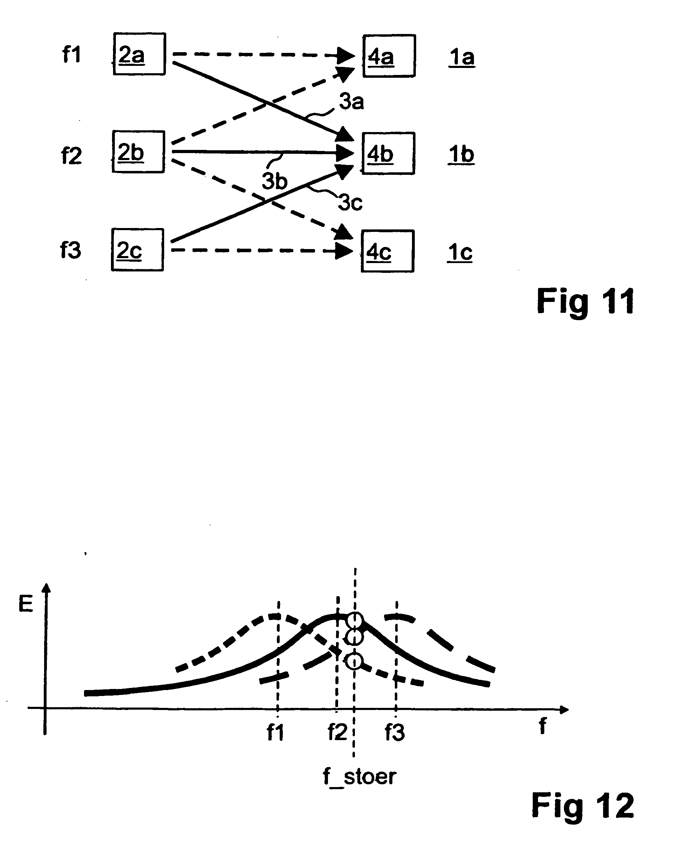

Figur 11 zeigt eine Erweiterung der Lichtschranken-Anordnung gemäß Figur 9. Die Lichtschranken-Anordnung gemäß Figur 11 umfasst drei Lichtschranken 1a, 1b, 1c mit jeweils einen Lichtstrahlen 3a, 3b, 3c emittierenden Sender 2a, 2b, 2c und drei Empfängern 4a, 4b, 4c. Bei dieser Anordnung gelangen die Lichtstrahlen 3a, 3b, 3c der Sender 2a, 2b, 2c nicht nur zu den jeweils gegenüberliegenden, zugeordneten Empfängern 4a, 4b, 4c, sondern auch zu deren nächsten Nachbarn. Die Sender 2a, 2b, 2c der Anordnung emittieren Sendepulse mit unterschiedlichen Taktfrequenzen f1, f2, f3, wie in Figur 11 angedeutet. Die empfangsseitige digitale Filterung erfolgt analog zu den vorigen Ausführungsbeispielen.

Jeder Empfänger 4a, 4b, 4c, der von einem benachbarten Sender 2a, 2b, 4c genügend Licht erhält, kann diesen erkennen und bezüglich vorhandenem Objekt auswerten. Dadurch werden die Lücken im Überwachungsbereich, die zwischen den Lichtachsen der Lichtstrahlen 3 entstehen, erfasst. Außerdem kann jeder Empfänger 4a, 4b, 4c seinen benachbarten Sender 2a, 2b, 2c bezüglich Funktion überwachen und gegebenenfalls ein Warnsignal ausgeben. Diese Funktionalität wird möglich, indem nach der Messung auf den eigenen Sender 2a, 2b, 2c mit der der Taktfrequenz dieses Senders 2a, 2b, 2c entsprechenden Abtastfrequenz sporadisch oder zyklisch eine Kontrollmessung auf die benachbarte Taktfrequenz durchgeführt wird.

Figur 12 zeigt die in den Empfängern 4a, 4b, 4c vorgesehenen Abtastbandpässe für die Taktfrequenzen f1, f2 und f3. Zur Kontrolle kann die Bandbreite dadurch vergrößert werden, dass die Abtastung des Empfangssignals für die digitale Filterung nur über wenige Abtastperioden erfolgt. Das hat den Vorteil, dass die Messung wesentlich schneller erfolgt und die Frequenzbereiche zwischen den diskreten Abtastfrequenzen f1, f2 und f3 mit erfasst werden. Mit diesem Vorgehen können die benachbarten Sender 2 kontrolliert, bzw. eine Störeinstrahlung mit der Frequenz $f_{stör}$ erkannt und grob einem Frequenzbereich zugeordnet werden.

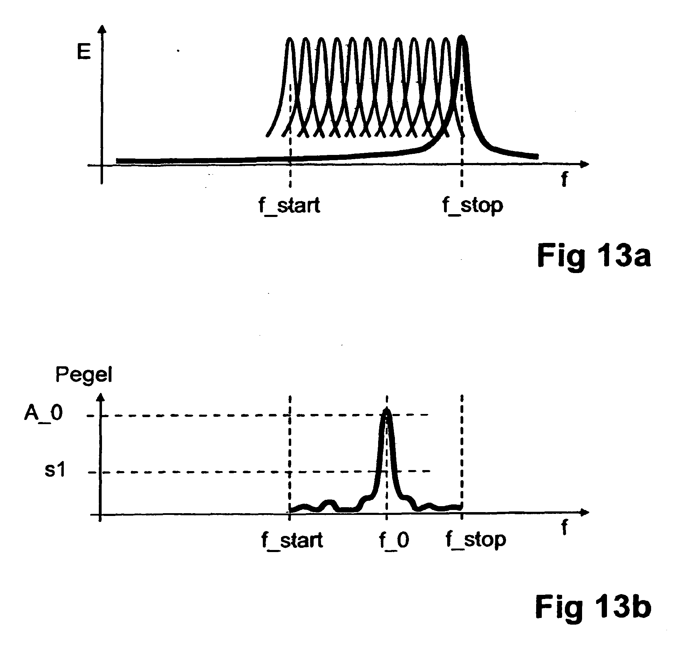

Bei der Lichtschranke 1 gemäß Figur 1 kann, ebenso wie bei den Lichtschranken-Anordnungen der Figuren 9 und 11, die Abtastfrequenz und damit der Abstandsbandpass während des Detektionsbetriebs selbsttätig auf die Takttrequenz des jeweiligen Senders 2 eingestellt werden. Dies ist exemplarisch in den Figuren 13a, 13b, für eine Lichtschranke 1 gemäß Figur 1 dargestellt.

Figur 13a zeigt, wie der Abtastbandpass beginnend bei der Abtastfrequenz $f_{start}$ bis $f_{stop}$, verschoben wird. Die mit den jeweiligen Abtastbandpässen gemessenen Pegel ergeben bei eingeschaltetem Sender 2 einen Verlauf wie in Figur 13b gezeigt. Der Maximalpegel A0 entspricht dem Pegel für den freien Überwachungsbereich, wenn mit dieser Frequenz f0 abgetastet wird. Diese Werte können für einen Teachvorgang nach Figur 9 verwendet werden.

Ist der Sender 2 ausgeschaltet, kann die Frequenz und Intensität einer oder mehrerer Fremdlichtquellen bestimmt werden. Diese Bestimmung von Fremdlichtquellen in einem Diagnosemodus ist auch für andere Sensorprinzipien, wie z.B. Taster oder Reflexlichttaster, einsetzbar.

Mit der Auswertung der momentanen Mittelwerte können auch Störfrequenzen erkannt werden, die über der Sendetaktfrequenz liegen. Störfrequenzen in unmittelbarer Nähe der Sendetaktfrequenz würden nicht erkannt, die Amplitude des Empfangssignales und den Mittelwert Um1 nur wesentlich verändern. Um auch solche Störungen zu erkennen, müsste die Abtastfrequenz deutlich verschoben werden.

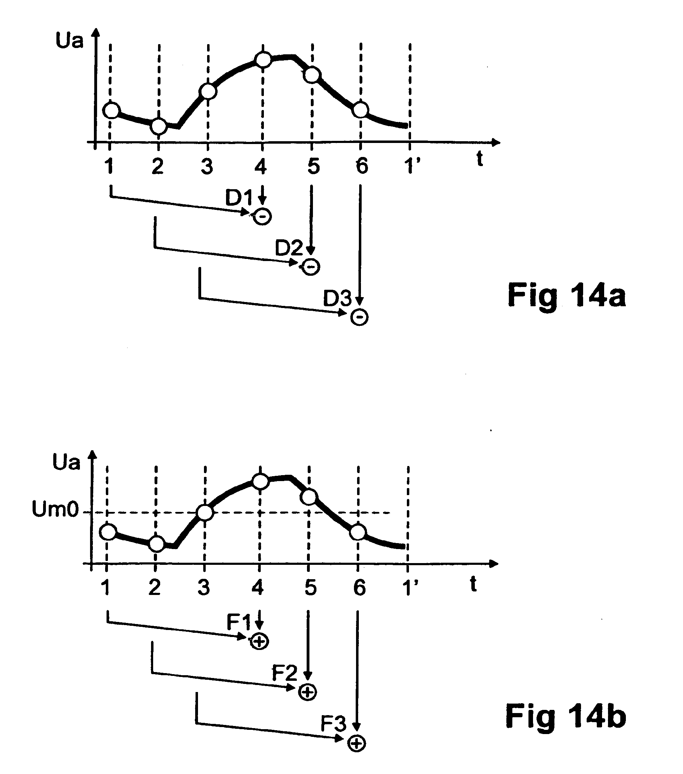

Figur 14a zeigt, eine Abtastung des Empfangssignals entsprechend Figur 2b, wobei im gezeigten Beispiel eine Sendetaktperiode sechs Mal abgetastet wird. Aus den entsprechenden Messwertepaaren wird jeweils die Differenz, D1 = u(1) - u(4), D2 = u(2) - U(5) und D3 = u(3) - u(6) gebildet. Dazu werden jeweils die drei zurückliegenden Messwerte gespeichert, zum Beispiel u(1), u(2) und u(3). Nach dem Aufsummieren der Differenz D1 in der Summe Su1 kann u(1) gelöscht und dafür u(4) gespeichert werden. Somit genügt eine Speichertiefe von 3 Abtastschritten.

Figur 14b zeigt, wie die bereits vorhandenen Messwerte u(1), u(2) und u(3) gemäß Figur 14a zur Störerkennung genutzt werden. Durch Addition der Messwertepaare wir d der Mittelwert Um0 gebildet. Im ungestörten Fall liegen die Mittelwerte F von Messwertepaaren, die gerade um eine halbe Sendetaktperiode zueinander versetzt sind, in der Nähe des durch die Analogschaltung vorgegebenen Arbeitspunktes.

$$F1 = (\ u(1) + u(4))\ /\ 2$$

$$F2 = (\ u(2) + u(5))\ /\ 2$$

$$F3 = (\ u(3) + u(6))\ /\ 2$$

Durch die weitere Mitteilung über mehrere Perioden des Sendetaktes entsteht der stabile Mittelwert Um0. Bedingt durch die Hochpasskopplung im Empfangsverstärker stellt sich dieser Mittelwert Um0 auch bei überlagerten Störungen ein.

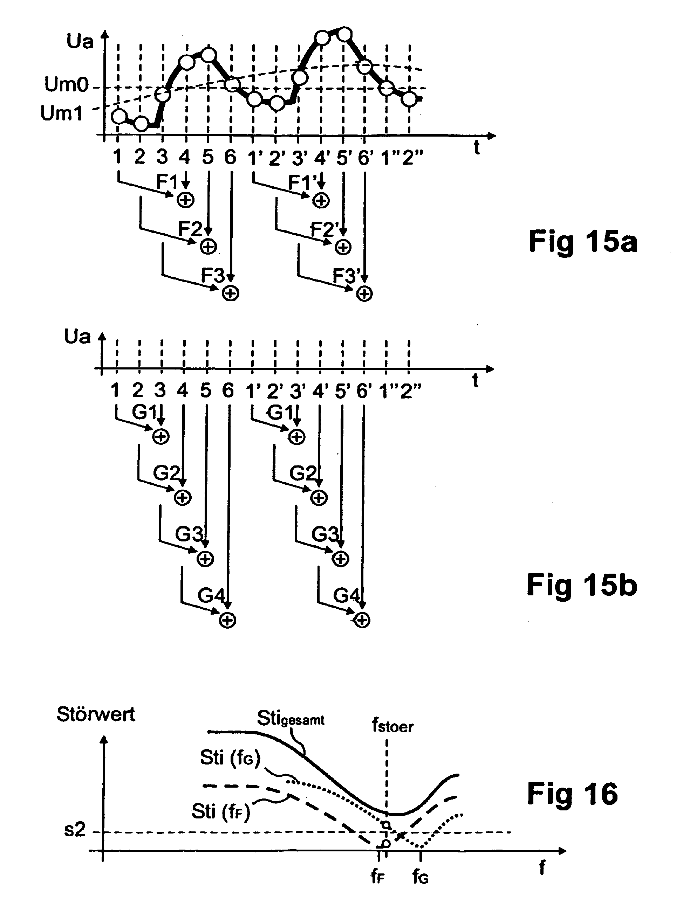

Figur 15a zeigt als Erweiterung der Figuren 14a, 14b den Fall, dass eine niederfrequente Störung das verstärkte Empfangssignal Ua überlagert. Dadurch variiert der kurzzeitige Mittelwert Um1, dessen zeitlicher Verlauf durch die jeweiligen Werte von F (F1, F2, F3, F1', usw.) bestimmt wird. Die Betragsdifferenz (Um1 - Um0) ist ein Maß für den momentanen Störwert. Über die vorgegebene Anzahl Perioden n aufsummiert ergibt sich das Störwertintegral Sti. Übersteigt Sti den Störschwellwert s2 gilt die Störung als erkannt und es können Maßnahmen zur Stabilisierung des Schaltsignales ergriffen werden. Ein Möglichkeit dazu ist, den Schaltausgang so lange einzufrieren, bis das Störwertintegral Sti wider unter den Störschwellwert s2 abgesunken ist. Eine weiter Maßnahme ist die Reduzierung der Schaltfrequenz, solange die Störung erkannt wird.

Figur 15b zeigt, wie durch eine andere Zusammenstellung von Messwertepaaren G, zum Beispiel G1 = u(1) - u(3) eine um 25% höhere Abtastfrequenz vorgetäuscht wird. Hiermit kann auch die Störung in der Nähe der Sendetaktfrequenz sicher erkannt werden. Eine weitere Möglichkeit ist die Bildung von Messwertepaaren H, wobei H 1 = u(1) - u(5), H2 = u(2) - u(6), usw. sein kann. Damit würde eine um 20% tiefere Abtastfrequenz vorgetäuscht.

Figur 16 zeigt den Verlauf des Störwertintegrales Sti über der Abtastfrequenz f. Bei der Frequenz $f_A$ liegt das Minimum für den Fall der Abtastung mit Messwertepaaren F nach Figur 15a. Eine Sinusstörung mit der Frequenz $f_{stör}$ in unmittelbarer Nähe zu $f_F$ würde hier nicht erkannt. Das Störwertintegral $Sti(f_G)$, das mit Hilfe der Messwertepaare G gebildet wird, liegt bei der Störfrequenz $f_{stör}$ deutlich über der Störschwelle s2. Durch Addition beider Störintegralverläufe ergibt sich der Gesamtverlauf $Sti_{gesamt}$. Damit wird jede Störung, die eine ausreichende Amplitude hat, sicher erkannt.

Bezugszeichenliste

| | |
|---|---|
| (1) | Lichtschranke |
| (1a) | Lichtschranke |
| (1b) | Lichtschranke |
| (2) | Sender |
| (2a) | Sender |
| (3) | Lichtstrahlen |
| (3a) | Lichtstrahlen |
| (4) | Empfänger |
| (4a) | Empfänger |
| (4b) | Empfänger |
| (5) | Signalaufbereitungseinheit |
| (6) | Auswerteeinheit |
| (7) | Schaltausgang |
| (8) | Gehäuse |
| (9) | Gehäuse |
| (10) | Fremdlicht |
| (11) | Steuerleitung |
| (12) | Triggereingang |
| (13) | Triggerausgang |
| (13a) | Triggerausgang |
| BP: | Abtast-Bandpass |
| B1, B3: | Frequenzbereich in denen Fremdlicht unterdrück wird |
| B4: | Bandbreite des Abtastbandpasses |
| B2: | Bereich, der für benachbarte Lichtachsen zu vermeiden ist |
| D1, D2, D3: | Differenz der abgetasteten Spannungen an der Stelle t=1 ...6 |

$$D1 = u(1) - u(4)$$

$$D2 = u(2) - u(5)$$

$$D3 = u(3) - u(6)$$

| | |
|---|---|
| E: | berechnetes Ergebnis als Maß für den Empfangspegel |
| E: | berechnetes Ergebnis als Maß für den Empfangspegel |

$$E = |Su1| + |Su2| + |Su3|$$

| | |
|---|---|
| f1, f2, f3: | Taktfrequenzen |
| G: | Messwertepaar |
| H: | Messwertepaar |
| F: | Messwertepaar |
| k: | Anzahl Abtastungen pro Taktperiode (2 < k < 16, vor- zugsweise 6) |
| n: | Anzahl der ausgewerteten Taktperioden (Burstlänge) (2 < n < 1000, vorzugsweise 32 für die Messung und 4 für die Kontrolle) |
| PV: | Phasenversatz zwischen Sendetakt und Abtastzyklus |
| Su1, Su2, Su3: | Aufsummierte Differenzwerte |

$$Su1 = D1_1 + D1_2 + ... + D1_n$$

$$Su2 = D2_1 + D2_2 + ... + D2_n$$

$$Su3 = D3_1 + D3_2 + ... + D3_n$$

| | |
|---|---|
| s1: | Schwellwert zur generierung eines Objektfeststellungs- signales |
| s2: | Störschwelle |
| Ue: | Eingangsspannung der Signalaufbereitungseinheit |
| Ua: | Ausgangsspannung der Signalaufbereitungseinheit |
| Um: | Mittelwert |

**Patentansprüche**

1. Verfahren zum Betrieb wenigstens einer Lichtschranke (1), umfassend einen Sender (2) und einen Empfänger (4), wobei bei freiem Strahlengang der Lichtschranke (1) vom Sender (2) mit einer Taktfrequenz emittierte Sendepulse auf den Empfänger (4) auftreffen, **dadurch gekennzeichnet, dass** die im Empfänger (4) der wenigstens einen Lichtschranke (1) durch den Sendepuls generierten Empfangssignale digital gefiltert werden, in dem diese mit einer Abtastfrequenz mit mehreren Abtastunggen asynchron zur Taktfrequenz des Senders (2) abgetastet werden, und dass aus den bei den Abtastungen erhaltenen Messwerten ein Objektfeststellungssignal generiert wird.

2. Verfahren nach Anspruch 1, **dadurch gekennzeichnet, dass** innerhalb einer Abtastperiode $2^k$ -(k > 1) Abtastungen durchgeführt werden, und jeweils Differenzen zweier Meßwerte, die um eine halbe Abtastperiode versetzt zueinander sind, gebildet werden, und dass aus der Summe der Differenzen das Objektfeststellungssignal generiert wird.

3. Verfahren nach Anspruch 2, **dadurch gekennzeichnet, dass** die Meßwertbildungen über mehrere Abtastperioden wiederholt werden, und dass aus den für die einzelnen Abtastperioden erhaltenen Differenzen Einzelsummen erhalten werden, aus welchen eine Summe gebildet wird, die zur Generierung des Objektfeststellungssignals herangezogen wird.

4. Verfahren nach Anspruch 3, **dadurch gekennzeichnet, dass** zur Generierung des Objektfeststellungssignals die Summe mit einem Schwellwert bewertet wird.

5. Verfahren nach einem der Ansprüche 2 bis 5, **dadurch gekennzeichnet, dass** die Abtastperiode zumindest näherungsweise einer Sendeperiode des Senders (2) entspricht.

6. Verfahren nach einem der Ansprüche 1 bis 6, **dadurch gekennzeichnet, dass** der Sender (2) Sendepulse mit einem Puls/Pausenverhältnis von zumindest näherungsweise 1: 1 emittiert.

7. Verfahren nach einem der Ansprüche 2 bis 6, **dadurch** gekennzeichet, dass die Abtastfrequenz in einem Einlernvorgang als Parameterwert vorgegeben wird.

8. Verfahren nach einem der Ansprüche 2 bis 6, **dadurch gekennzeichnet, dass** die Abtastfrequenz selbsttätig bestimmt wird.

9. Verfahren nach Anspruch 8, **dadurch gekennzeichnet, dass** die Abtastfrequenz selbsttätig auf die Taktfrequenz des Senders (2) nachgeführt wird.

10. Verfahren nach einem der Ansprüche 1 bis 9, **dadurch gekennzeichnet, dass** mehrere Lichtschranken (1) vorgesehen sind, deren Sender (2) mit unterschiedlichen Taktfrequenzen betrieben werden.

11. Verfahren nach Anspruch 10, **dadurch gekennzeichnet, dass** die Vorgabe der Taktfrequenz der Sender (2) der Lichtschranken (1) durch eine Verschaltung der einzelnen Sender (2) realisiert wird.

12. Verfahren nach einem der Ansprüche 10 oder 11, **dadurch gekennzeichnet, dass** jedem Sender (2) der einzelnen Lichtschranken (1) wenigstens ein Empfänger (4) zugeordnet ist, wobei in einem Einlemvorgang für den Empfänger (4) eine Abtastfrequenz zugewiesen wird, die an die Taktfrequenz des zugeordneten Senders (2) angepasst ist.

**Claims**

1. Method of operating at least one light barrier (1) comprising a transmitter (2) and a receiver (4), wherein transmission pulses emitted at a clock frequency by the transmitter (2) are incident on the receiver (4) when the transmission path of the light barrier (1) is free, **characterised in that** the received signals generated in the receiver (4) of the at least one light barrier (1) by the transmission pulse are digitally filtered **in that** these are scanned with several scannings at a scanning frequency asynchronous to the clock frequency of the transmitter (2) and that an object detection signal is generated from the measurement values obtained in the scannings.

2. Method according to claim 1, **characterised in that** $2^k$ (k > 1) scannings are performed within a scanning period and that respective differences of two measurement values offset relative to one another by half a scanning period are formed and that the object detection signal is generated from the sum of the differences.

3. Method according to claim 2, **characterised in that** the measurement value formations are repeated over several scanning periods and that from the differences, which are obtained for the individual scanning periods, individual sums are obtained from which a sum is formed which is utilised for generation of the object detection signal.

4. Method according to claim 3, **characterised in that** the sum is evaluated by a threshold value for generation of the object detection signal.

5. Method according to any one of claims 2 to 4, **characterised in that** the scanning period corresponds at least approximately with a transmission period of the transmitter (2).

6. Method according to any one of claims 1 to 5, **characterised in that** the transmitter (2) emits transmission pulses with a pulse/pause ratio of at least approximately 1:1.

7. Method according to any one of claims 2 to 6, **characterised in that** the scanning frequency is predetermined as a parameter value in a learning process.

8. Method according to any one of claims 2 to 6, **characterised in that** the scanning frequency is determined automatically.

9. Method according to claim 8, **characterised in that** the scanning frequency is automatically adjusted to the clock frequency of the transmitter (2).

10. Method according to any one of claims 1 to 9, **characterised in that** several light barriers (1) are provided, the transmitters (2) of which are operated at different clock frequencies.

11. Method according to claim 10, **characterised in that** the predetermination of the clock frequency of the transmitters (2) of the light barriers (1) is realised by a connecting of the individual transmitters (2).

12. Method according to one of claims 10 and 11, **characterised in that** at least one receiver (4) is associated with each transmitter (2) of the individual light barriers (1), wherein in a learning process for the receiver (4) a scanning frequency is allocated which is matched to the clock frequency of the associated transmitter (2).

**Revendications**

1. Procédé de fonctionnement d'au moins une barrière lumineuse (1), comprenant un émetteur (2) et un récepteur (4), dans lequel, lorsque le trajet des rayons de la barrière lumineuse (1) est libre, des impulsions d'émission émises par l'émetteur (2) à une fréquence d'horloge atteignent le récepteur (4), **caractérisé en ce que** les signaux de réception générés dans le récepteur (4) de ladite au moins une barrière lumineuse (1) par l'impulsion d'émission sont filtrés numériquement, ceux-ci étant échantillonnés à une fréquence d'échantillonnage par plusieurs échantillonnages de manière asynchrone par rapport à la fréquence d'horloge de l'émetteur (2), et qu'un signal de détection d'objet est généré à partir des valeurs de mesure obtenues lors des échantillonnages.

2. Procédé selon la revendication 1, **caractérisé en ce que** $2^k$ (k > 1) échantillonnages sont effectués à l'intérieur d'une période d'échantillonnage, et que l'on forme chaque fois la différence de deux valeurs de mesure qui sont décalées l'une par rapport à l'autre d'une demi-période d'échantillonnage, et que le signal de détection d'objet est généré à partir de la somme des différences.

3. Procédé selon la revendication 2, **caractérisé en ce que** les formations de valeurs de mesure sont répétées sur plusieurs périodes d'échantillonnage, et qu'à partir des différences obtenues pour les différentes périodes d'échantillonnage sont obtenues des sommes individuelles à partir desquelles est formée une somme qui est utilisée pour générer le signal de détection d'objet.

4. Procédé selon la revendication 3, **caractérisé en ce que** pour générer le signal de détection d' obj et, la somme est comparée à une valeur seuil.

5. Procédé selon une des revendications 2 à 4, **caractérisé en ce que** la période d'échantillonnage correspond au moins approximativement à une période d'émission de l'émetteur (2).

6. Procédé selon une des revendications 1 à 5, **caractérisé en ce que** l'émetteur (2) émet des impulsions d'émission avec un rapport impulsion/pause d'au moins approximativement 1:1.

7. Procédé selon une des revendications 2 à 6, **caractérisé en ce que** la fréquence d'échantillonnage est prescrite en tant que valeur de paramètre dans une phase d'apprentissage.

8. Procédé selon une des revendications 2 à 6, **caractérisé en ce que** la fréquence d'échantillonnage est déterminée automatiquement.

9. Procédé selon la revendication 8, **caractérisé en ce que** la fréquence d'échantillonnage est asservie automatiquement à la fréquence d'horloge de l'émetteur (2).

10. Procédé selon une des revendications 1 à 9, **caractérisé en ce que** plusieurs barrières lumineuses (1) sont prévues, dont les émetteurs (2) fonctionnent à différentes fréquences d'horloge.

11. Procédé selon la revendication 10, **caractérisé en ce que** la prescription de la fréquence d'horloge des émetteurs (2) des barrières lumineuses (1) est réalisée par une connexion des différents émetteurs (2).

12. Procédé selon une des revendications 10 ou 11, **caractérisé en ce qu'**au moins un récepteur (4) est associé à chaque émetteur (2) des différentes barrières lumineuses (1), une fréquence d'échantillonnage adaptée à la fréquence d'horloge de l'émetteur (2) associé étant attribuée au récepteur (4) dans une phase d'apprentissage.

Fig 1

Fig 2a

Fig 2b

Fig 3

Fig 4

Fig 5

Fig 6

Fig 7

Fig 8

Fig 9

Fig 10

f1   2a

3a

f2   2b

3b

3c

f3   2c

4a   1a

4b   1b

4c   1c

**Fig 11**

E

f1   f2   f3   f

f_stoer

**Fig 12**

Fig 13a

Fig 13b

**Fig 14a**

**Fig 14b**

**Fig 15a**

**Fig 15b**

**Fig 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1464983 A1
- DE 10355008 A1

- EP 1821448 A1